# FASCICULE DE BREVET EUROPEEN

(11) **EP 0 481 862 B1**
(45) Date de publication et mention de la délivrance du brevet: **15.03.1995**
(21) Numéro de dépôt: 91402728.9
(22) Date de dépôt: 11.10.1991
(51) Int. Cl.: H02P 9/30

(54) **Procédé et dispositif de régulation d'un alternateur**
Verfahren und Vorrichtung zur Regelung eines Wechselstromgenerators
Control method and device for an alternator

(30) Priorité: 15.10.1990 FR 9012684
(43) Date de publication de la demande: 22.04.1992
(73) Titulaire: VALEO EQUIPEMENTS ELECTRIQUES MOTEUR, 94000 Créteil (FR)
(72) Inventeur: Pierret, Jean-Marie, F-75012 Paris (FR); Ducrot, Christian, F-94000 Creteil (FR)
(74) Mandataire: Gamonal, Didier

(56) Documents cités:
- EP-A- 0 201 243
- EP-A- 0 378 075
- DE-A- 2 933 462
- DE-A- 3 914 863
- DE-A- 4 006 387
- US-A- 4 670 704
- US-A- 4 920 308

## Description

La présente invention a pour objet un procédé de régulation d'un alternateur par traitement numérique de la fonction de régulation notamment pour les véhicules automobiles.

Un alternateur est une machine génératrice produisant des tensions et courants alternatifs dont la fréquence est proportionnelle à la vitesse d'entraînement de l'inducteur ou rotor qui induit un courant alternatif dans les enroulements du stator. A la sortie des enroulements du stator, des diodes assurent le redressement dudit courant pour que le véhicule dispose d'une tension continue.

Un alternateur nécessite une régulation en tension de manière à délivrer une force-électro-motrice qui soit sensiblement constante quel que soit le nombre de circuits utilisateurs à un moment donné et, quelle que soit la vitesse du moteur afin d'assurer une charge correcte de la batterie du véhicule.

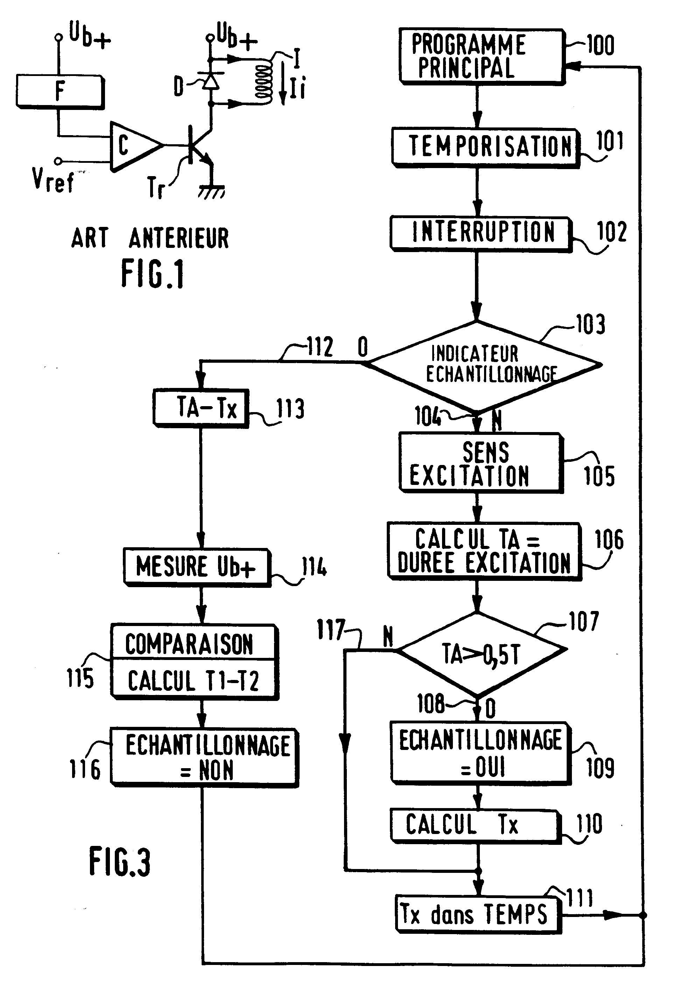

Le principe de régulation actuellement utilisé sera décrit en regard de la figure 1. A la sortie des diodes constituant le pont redresseur, est connecté un régulateur permettant, à partir de la tension d'alternateur redressée Ub+, de réguler le courant d'excitation Ii dans l'enroulement inducteur I par l'intermédiaire d'un étage de puissance de commande Tr du courant d'excitation. Cet étage de puissance Tr a été représenté sur la figure 1 sous la forme d'un transistor dont l'émetteur est relié à la masse et dont le collecteur est relié à une extrémité de l'enroulement inducteur I, l'autre extrémité étant reliée à la sortie alternateur elle-même reliée à la batterie.

Cette tension Ub+ présente, après redressement un fort taux d'ondulation généré en particulier par la commutation des diodes du pont redresseur et les parasites émis par les appareils utilisateurs.

Pour remédier à cet inconvénient on filtre la tension Ub+ par un filtre F dont la sortie est reliée à une première entrée d'un comparateur C qui reçoit, sur sa seconde entrée une tension de référence Vref. La sortie du comparateur C est reliée à la base du transistor Tr.

Si la tension Ub+ est inférieure à Vref, un courant Ii est appliqué sur l'inducteur par la batterie via le filtre F et le comparateur C. Par contre, si Ub+ est supérieur à Vref, le transistor Tr se bloque et aucun courant n'est fourni à l'inducteur I, c'est-à-dire que le courant d'excitation est modulé par tout ou rien.

Une diode de recirculation D connectée en série inverse avec l'étage de puissance Tr permet, lors du blocage de cet étage de puissance Tr, d'assurer le maintien du courant d'excitation Ii dans l'enroulement inducteur I entre deux états passants de cet étage de puissance Tr.

Ainsi, la tension appliquée au réseau d'utilisation est régulée après filtrage en contrôlant l'excitation de la génératrice constituée de l'alternateur et de son pont redresseur.

La tension Ub+ en sortie de la génératrice présente ainsi une ondulation de régulation à l'image du courant d'excitation, dont l'amplitude varie en fonction de l'excitation de l'alternateur.

Cette tension est ainsi une tension périodique de période T dont chaque période comprend une alternance T1 au cours de laquelle la tension est appliquée sur l'inducteur et une alternance T2 au cours de laquelle aucune tension n'est appliquée sur l'inducteur. Le rapport T1/T2 est appelé rapport cyclique et il est souhaitable que ce rapport varie aussi lentement que possible.

Bien entendu, la représentation du principe de régulation qui vient d'être donnée est très schématique et en fait, un circuit de régulation fait appel à de très nombreux transistors ce qui a déjà conduit à réaliser les circuits de régulation sous forme intégrée. Les circuits intégrés de régulation peuvent ainsi être des circuits multifonctions c'est-à-dire qu'ils assurent outre la fonction de régulation proprement dite, au moins la fonction de signalisation de charge de la batterie et éventuellement de la tension de la courroie reliant l'alternateur au moteur. De tels circuits restent cependant figés dans leur structure et leur mode de fonctionnement, or leur conception et leur réalisation sont longues et coûteuses.

Par ailleurs, dans les régulateurs classiques la réponse du comparateur est une réponse par tout ou rien c'est à dire qu'il indique si le courant d'excitation doit être fourni ou non, mais il ne donne aucune valeur quantitative ce qui entraîne des variations importantes du rapport cyclique, variations d'autant plus importantes que le comparateur C agit avec un retard plus ou moins important dû au filtre F.

La nécessité de disposer de différents paramètres issus du fonctionnement de l'alternateur, de même que la demande des constructeurs de délivrer des puissances de plus en plus importantes conduisent à la nécessité d'une gestion rigoureuse du fonctionnement du générateur, une bonne adaptation au système constitué par les circuits de commande du véhicule et une bonne stabilité de fonctionnement.

Pour résoudre ces problèmes, on a déjà essayé d'utiliser des techniques numériques à base d'un microprocesseur comme illustré sur le document US-A-4 670 704. Si de telles techniques permettent le calcul d'une valeur théorique de la tension d'excitation en fonction de paramètres extérieurs tels que charge et température de la batterie, régime du moteur, tension de la courroie..., leur utilisation n'a pas permis de réaliser une régulation complète, du fait de la difficulté à s'affranchir des ondulations de la tension d'excitation et donc de réaliser sa mesure de manière précise et sûre.

La présente invention résout ces problèmes et propose à cet effet un procédé de régulation du courant d'excitation d'un inducteur d'alternateur pour véhicule automobile, ledit alternateur comprenant notamment un pont redresseur délivrant une tension redressée Ub+ à réguler présentant une ondulation à fréquence faible, variable en amplitude, superposée à une ondulation à fréquence élevée, constante en amplitude, ladite tension redressée Ub+ étant ainsi une tension périodique de période T, dont chaque période comprend une première alternance de durée T1 au cours de laquelle une tension est appliquée à l'inducteur de l'alternateur et une seconde alternance de durée T2 au cours de laquelle aucune tension n'est appliquée à l'inducteur, procédé consistant :
- à déclencher la mesure de la tension redressée Ub+ à l'intérieur d'une des alternances T1,T2,
- à réaliser la mesure pendant un temps Te prédéterminé par échantillonnage c'est-à-dire en effectuant des mesures successives et rapprochées,
- à comparer la valeur Ub+ mesurée à une valeur théorique calculée,
- à déduire de cette comparaison les valeurs T1 et T2 des alternances de la période suivante T. caractérisé en ce qu'il consiste :
- à déterminer à l'intérieur de chaque période T quelle est la plus longue des alternances T1,T2,
- à calculer, pour l'alternance la plus longue un temps Tx au bout duquel, pendant un temps Te prédéterminé, on effectue la mesure de la tension redressée Ub+ par échantillonnage, ledit temps Tx étant calculé de manière telle que le créneau d'échantillonnage correspondant au temps Te soit centré sur l'alternance la plus longue.

Ainsi, en centrant sur l'alternance la plus longue la mesure de la tension redressée à réguler on s'affranchit des variations dues en particulier à l'ondulation de régulation ; de même on s'affranchit de l'ondulation d'alternateur en effectuant une mesure par échantillonnage.

Suivant un aspect de l'invention le procédé constitue de cette manière un filtre numérique de la régulation.

On appréciera que le procédé suivant l'invention effectue une mesure quantitative c'est-à-dire qu'il permet de déterminer avec précision la valeur souhaitable du courant d'excitation à appliquer à l'inducteur, la valeur dudit courant dépendant du rapport cyclique précédemment défini.

D'autres caractéristiques et avantages de l'invention apparaîtront au cours de la description qui va suivre en regard des dessins annexés dans lesquels :
- la figure 1 est un schéma de principe connu déjà décrit de la régulation d'un alternateur ;
- la figure 2 montre des diagrammes temporels illustrant le fonctionnement du procédé suivant l'invention ;
- la figure 3 est un exemple d'organigramme de fonctionnement de l'invention.

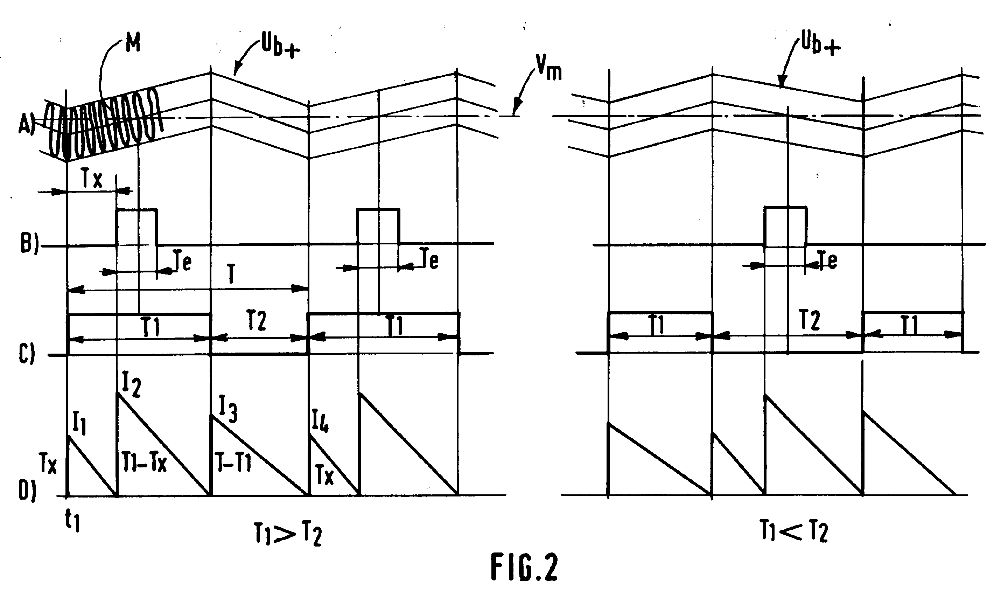

La figure 2A illustre la tension à réguler Ub+ en sortie de l'alternateur et sur le réseau de bord du véhicule, le temps étant porté en abcisse et la tension en ordonnée.

Cette tension Ub+ présente une ondulation de régulation à fréquence basse à laquelle est superposée une ondulation M dite d'alternateur de fréquence beaucoup plus élevée, inhérente en particulier à la commutation des diodes. Cette ondulation M est constante en amplitude alors que les variations de l'ondulation à fréquence basse sont dues aux variations du courant d'excitation appliqué à l'inducteur.

La valeur moyenne de la tension Ub+ oscille ainsi autour d'une tension moyenne Vm.

La figure 2C illustre le diagramme temporel du signal d'excitation qui présente une période T se décomposant en deux alternances T et T2. Comme il a été explicité plus haut, le rapport T1/T2 est appelé rapport cyclique.

Au cours de l'alternance T1, la tension Ub+ croît, ce qui correspond à une application de la tension sur l'inducteur I (transistor Tr passant sur la figure 1), alors que pendant l'alternance T2, la tension Ub+ décroît, ce qui correspond à une non application de la tension sur l'inducteur I (transistor Tr bloqué sur la figure 1).

Le rapport cyclique peut théoriquement varier de 0 à 100 % et sa valeur dépend en particulier des besoins des circuits utilisateurs et de l'état de charge de la batterie.

Sur la figure 2A on constate que la valeur moyenne de la tension Ub+ est égale à la tension Vm au milieu des alternances T1 et T2.

Suivant l'invention, la mesure de la tension Ub+ n'est pas perturbée par l'ondulation lente de régulation si, comme représenté sur la figure 2B, cette mesure est effectuée pendant un créneau d'échantillonnage de durée Te centré sur les alternances T1 ou T2. Bien entendu, la durée Te doit toujours être plus faible que la durée de l'alternance T1 ou T2 sur laquelle le créneau d'échantillonnage est centré de manière à éviter la mesure de valeurs erronées.

Suivant l'invention, après avoir calculé les valeurs respectives de T1 et T2, on centre le créneau d'échantillonnage Te sur l'alternance la plus longue.

Deux cas ont été représentés sur la figure 2, la partie gauche correspondant au cas T1>T2 avec Te centré sur T1 et la partie droite correspondant au cas inverse T1<T2 avec Te centré sur T2.

Suivant l'invention, il s'agit donc, à partir du début de l'alternance la plus longue de définir un temps Tx au bout duquel on déclenchera le créneau d'échantillonnage Te.

Si T1>T2 (partie gauche de la figure 2) le temps Tx a pour valeur (T1-Te)/2 et si au contraire T1<T2 (partie droite de la figure 2) le temps Tx a pour valeur (T2-Te)/2.

L'ensemble de ces opérations s'effectue par un programme géré par microprocesseur. A titre d'exemple, un tel programme se déroule comme représenté sur la figure 3.

On trouve en 100 le programme principal qui calcule en permanence la valeur théorique de référence de la tension Ub+ à réguler. A cet effet, le microprocesseur peut recevoir des informations aussi diverses que l'état de charge de la batterie, la température de ladite batterie, le régime moteur ..... et en fonction de ces informations procéder aux calculs nécessaires. Ce programme principal 100 ne faisant pas partie de la présente invention ne sera pas décrit plus en détail.

On trouve en 101 une temporisation qui est chargée avec des valeurs calculées et qui va permettre de provoquer des interruptions 102 du programme principal 100 permettant au microprocesseur d'effectuer le programme de régulation proprement dit.

Pour décrire en détail ce programme de régulation, on suppose se trouver à l'instant t1 juste avant le début de l'alternance T1, c'est-à-dire au moment où la temporisation 101 a provoqué l'interruption I1 comme représenté sur la figure 2D.

L'indicateur d'échantillonnage ayant été précédemment positionné sur N (non) c'est sa sortie 104 qui est choisie et l'on procède aux opérations suivantes :
- en 105 on inverse le niveau de sortie de la commande d'excitation de manière à déclencher le départ de l'alternance T1,
- en 106 on lit la valeur TA de l'alternance T1 précédemment calculée,
- en 107 on teste la valeur TA est supérieure à T/2, T étant une valeur fixe prédéterminée,
- dans l'exemple considéré, la réponse étant positive la sortie 108 du test 107 bascule en 109, l'indicateur d'échantillonnage 103 sur la position O (oui) car T1 étant supérieur à T/2 est obligatoirement l'alternance la plus longue,
- puis en 110 on calcule le temps Tx = (TA-Te)/2 qui doit séparer le début de l'alternance T1 du déclenchement de l'échantillonnage. (Te est bien entendu une valeur fixe prédéterminée),
- en 111 on charge la valeur Tx ainsi calculée dans la temporisation 101. Au bout du temps Tx, la temporisation 101 déclenche en 102 une interruption représentée en I2 sur la figure 2D.

L'indicateur d'échantillonnage 103 ayant été positionné en O par 109 c'est sa sortie 112 qui est choisie et les opérations suivantes sont effectuées.
- on charge en 103 dans la temporisation 101 la valeur T1-Tx qui correspond à la durée de la fin de l'alternance T1,
- en 114 on procède pendant la durée Te du créneau d'échantillonnage à la mesure de Ub+ et l'on procède au calcul de sa valeur moyenne,
- en 115 on compare la valeur Ub+ mesurée en 114 à la valeur théorique calculée par le programme principal 100 et on en déduit les nouvelles valeurs des alternances T1 et T2 pour la prochaine période T,
- en 116 on bascule l'indicateur d'échantillonnage 103 sur la position N (non).

Au bout du temps T1-Tx, la temporisation 101 déclenche une interruption représentée en I3 sur la figure 2D.

L'indicateur d'échantillonnage ayant été positionné en N par 116 c'est sa sortie 104 qui est choisie et l'on procède aux opérations suivantes :
- en 105 on inverse le niveau de sortie de la commande d'excitation de manière à déclencher le départ de l'alternance T2,
- en 106 on lit la valeur TA de l'alternance T2 en effectuant l'opération T2 = TA = T-T1,
- en 107 on teste si la valeur TA est supérieure à T/2.

Dans l'exemple considéré la réponse étant négative (T1>T2) c'est la sortie 117 du test 107 qui est validée, cette sortie 117 arrive directement en 111 où l'on charge la temporisation 101 avec la valeur TA correspondant à l'alternance T2.

Au bout du temps TA = T2 = T-T1, la temporisation 101 déclenche une interruption représentée en I4 sur la figure 2D dont les effets sont identiques à l'interruption I1 précédemment décrite et le cycle recommence.

La description du programme de régulation qui vient d'être faite a pris comme exemple la partie gauche de la figure 2 c'est-à-dire le cas où l'alternance T1 est plus grande que l'alternance T2. Il est bien entendu que ce même programme de régulation s'applique parfaitement à la partie droite de la figure 2 c'est-à-dire le cas où l'alternance T1 est plus petite que l'alternance T2.

## Revendications

1. Procédé de régulation du courant d'excitation d'un inducteur d'alternateur pour véhicule automobile, ledit alternateur comprenant notamment un pont redresseur délivrant une tension redressée Ub+ à réguler présentant une ondulation à fréquence faible, variable en amplitude, superposée à une ondulation à fréquence élevée, constante en amplitude, ladite tension redressée Ub+ étant ainsi une tension périodique de période T dont chaque période comprend une première alternance de durée T1 au cours de laquelle une tension est appliquée à l'inducteur de l'alternateur et une seconde alternance de durée T2 au cours de laquelle aucune tension n'est appliquée à l'inducteur, procédé consistant :
- à déclencher la mesure de la tension redressée Ub+ à l'intérieur d'une des alternances T1,T2,
- à réaliser la mesure pendant un temps Te prédéterminé par échantillonnage, c'est-à-dire en effectuant des mesures successives et rapprochées,
- à comparer la valeur Ub+ mesurée à une valeur théorique calculée,
- à déduire de cette comparaison les valeurs T1 et T2 des alternances de la période suivante T.
caractérisé en ce qu'il consiste :
- à déterminer à l'intérieur de chaque période T quelle est la plus longue des alternances T1,T2,
- à calculer pour l'alternance la plus longue un temps Tx au bout duquel, pendant un temps Te prédéterminé, on effectue la mesure de la tension redressée Ub+ par échantillonnage, ledit temps Tx étant calculé de manière telle que le créneau d'échantillonnage correspondant au temps Te soit centré sur l'alternance la plus longue.

2. Procédé suivant la revendication 1, caractérisé en ce que le temps Tx est égal à (T1-Te)/2 si l'alternance T1 est plus grande que l'alternance T2, Tx étant égal à (T2-Te)/2 si l'alternance T1 est plus petite que l'alternance T2.

3. Procédé suivant l'une des revendications précédentes, caractérisé en que la mesure de la tension redressée par échantillonnage constitue un filtre numérique.

## Patentansprüche

1. Verfahren zur Regelung des Erregerstroms der Erregerwicklung eines Wechselstromgenerators für Kraftfahrzeuge, wobei der Wechselstromgenerator insbesondere eine Gleichrichterbrücke umfaßt, die eine zu regelnde gleichgerichtete Spannung Ub+ abgibt, die eine Welligkeit mit niedriger Frequenz und veränderlicher Amplitude aufweist, welche eine Welligkeit mit hoher Frequenz und konstanter Amplitude überlagert, wobei die gleichgerichtete Spannung Ub+ somit eine periodische Spannung mit der Periode T ist, deren Perioden jeweils eine erste Halbperiode mit der Dauer T1 enthalten, in deren Verlauf eine Spannung an die Erregerwicklung des Wechselstromgenerators angelegt wird, sowie eine zweite Halbperiode mit der Dauer T2, in deren Verlauf keine Spannung an die Erregerwicklung angelegt wird, wobei das Verfahren darin besteht:
- die Messung der gleichgerichteten Spannung Ub+ innerhalb einer der Halbperioden T1, T2 auszulösen,
- die Messung während einer vorbestimmten Zeit Te durch Abtastung durchzuführen, das heißt mittels Ausführung aufeinanderfolgender und dicht beieinanderliegender Messungen,
- den gemessenen Wert von Ub+ mit einem berechneten Sollwert zu verleichen,
- aus diesem Vergleich die Werte T1 und T2 der Halbperioden für die folgende Periode T abzuleiten,
**dadurch gekennzeichnet**, daß es darin besteht:
- innerhalb jeder Periode T zu bestimmen, welche der Halbperioden T1, T2 die längste ist,
- für die längste Halbperiode eine Zeit Tx zu berechnen, nach deren Ablauf während einer vorbestimmten Zeit Te die Messung der gleichgerichteten Spannung Ub+ durch Abtastung erfolgt, wobei die Zeit Tx so berechnet wird, daß die der Zeit Te entsprechende Abtastperiodendauer auf die längste Halbperiode eingemittet ist.

2. Verfahren nach Anspruch 1 , **dadurch ge****kennzeichnet**, daß die Zeit Tx gleich (T1-Te)/2 ist, wenn die Halbperiode T1 größer als die Halbperiode T2 ist, während Tx gleich (T2-Te)/2 ist, wenn die Halbperiode T1 kleiner als die Halbperiode T2 ist.

3. Verfahren nach einem der vorangehenden Ansprüche, **dadurch gekennzeichnet**, daß die Messung der gerichteten Spannung durch Abtastung ein digitales Filter bildet.

## Claims

1. A method of regulating the excitation current in an alternator inductor for a motor vehicle, the said alternator comprising, in particular, a rectifier bridge delivering a rectified voltage Ub+ which is to be regulated and which comprises a low frequency waveform of variable amplitude, on which a high frequency waveform of constant amplitude is superimposed, the said rectified voltage Ub+ being accordingly a cyclic voltage of period T, each cycle of which comprises a first alternation of period T1, in the course of which a voltage is applied to the inductor of the alternator, and a second alternation of period T2, in the course of which no voltage is applied to the inductor, the method comprising:
- initiating measurement of the rectified voltage Ub+ within one of the alternations T1, T2,
- evaluating the measurement over a time Te which is predetermined by sampling, that is to say by carrying out successive iterative measurements,
- comparing the measured value Ub+ with a calculated theoretical value,
- deducing from that comparison the values T1 and T2 of the alternations in the next following cycle T,
- characterised in that it consists in:
- determining, within each period T, which of the two alternations T1, T2, is the longer,
- computing, for the longer of the two alternations, a time Tx at the end of which, during a predetermined time Te, measurement of the rectified voltage Ub+ is carried out by sampling, the said Tx being computed in such a way that the sampling pulse corresponding to the time Te is centred on the longer one of the alternations.

2. A method according to Claim 1, characterised in that the time Tx is equal to (T1- Te)/2 if the alternation T1 is greater than the alternation T2, Tx being equal to (T2-Te)/2 if the alternation T1 is shorter than the alternation T2.

3. A method according to one of the preceding Claims, characterised in that the measurement of the rectified voltage by sampling constitutes a digital filter.
